# EUROPEAN PATENT SPECIFICATION

(11) **EP 4 339 735 B1**
(45) Date of publication and mention of the grant of the patent: **04.11.2026**
(21) Application number: 23195784.6
(22) Date of filing: 06.09.2023
(51) Int. Cl.: G06F 1/16, H05K 5/02, F16M 11/10, F16M 13/00

(54) **DISPLAY DEVICE**
ANZEIGEVORRICHTUNG
DISPOSITIF D'AFFICHAGE

(30) Priority: 13.09.2022 JP 2022145425
(43) Date of publication of application: 20.03.2024
(73) Proprietor: Ricoh Company, Ltd., Tokyo 143-8555 (JP)
(72) Inventor: SAITO, Yoshito, Tokyo 143-8555 (JP)
(74) Representative: SSM Sandmair

(56) References cited:
- EP-A1- 4 242 793
- WO-A1-2021/165366
- CN-A- 104 252 204
- US-A1- 2012 320 514
- US-A1- 2017 000 250
- US-A1- 2021 317 945

## Description

### BACKGROUND

### Technical Field

The invention relates to a display device.

### Related Art

Japanese Patent No. 6175683 discloses a display including a built-in kickstand that enables the display to be placed in landscape orientation and portrait orientation, for the purpose of increasing the degree of freedom of installation of the display.

However, according to the technique disclosed in Japanese Patent No. 6175683, it is difficult to install the display with stability at an angle at which the display is easy to use regardless of whether the display is in landscape or portrait orientation.

EP 4 242 793 A1 discloses a display device including a thin portion, a thick portion, and an interface portion. The thin portion includes a display. The thick portion is disposed on a rear face of the thin portion thicker than the thin portion. The thick portion includes a recess. The interface portion connects to a connector of a cable for connection with an external device. The interface portion is disposed in the recess of the thick portion.

CN 104 252 204 A discloses a display module. The display module comprises a display device and a supporting mechanism, wherein the supporting mechanism comprises an adjusting plate, a first sleeve structure, a second sleeve structure, a third sleeve structure, a fourth sleeve structure, a first bent rod, a second bent rod, a third bent rod and a fourth bent rod; the first sleeve structure is inserted in the adjusting plate arranged on the back side of the display device; the first bent rod, the second bent rod, the third bent rod and the fourth bent rod respectively penetrate in two ends of the first sleeve structure and two ends of the second sleeve structure retractably; and the third sleeve structure and the fourth sleeve structure are respectively connected to the first bent rod, the third bent rod, the second bent rod and the fourth bent rod retractably. When the state of the display device is changed into an upright state with the aid of the supporting mechanism, the first bent rod, the second bent rod, the third bent rod and the fourth bent rod respectively stretch and retract relative to the first sleeve structure and the second sleeve structure, and the first bent rod, the third bent rod, the second bent rod and the fourth bent rod respectively stretch and retract relative to the third sleeve structure and the fourth sleeve structure, so that the transverse length and the longitudinal length of the supporting mechanism are adjusted.

WO 2021/165366 A1 discloses a portable monitor operable in a first orientation and a second orientation. The monitor includes a housing and a handle having arms. A back side of the housing includes grooves sized and shaped to receive, respectively, the arms of the handle. The handle is pivotable about handle axles to a plurality of positions including a first position, in which the arms are received by first sections of the grooves, a second position, in which the arms are received by second sections of the grooves, and intermediate positions between the first position and the second position.

US 2021/0317945 A1 discloses a display apparatus including a display assembly comprising a screen configured to display an image; and a stand connected to the display assembly to support the display assembly. The stand comprises a support bar extending in a front-rear direction, a leg extending upward from the support bar, and a plurality of coupling parts provided on the leg and arranged in the front-rear direction. The display assembly is connected to one of the plurality of coupling parts.

US 2012/0320514 A1 discloses a tablet support system including a chassis housing a plurality of components that provide a critical mechanical stack of the system. The plurality of components include a display that faces a first direction. The chassis includes a second surface facing a second direction that is opposite the first direction. A support member channel extends into the second surface. A subset of the plurality of components are positioned in the chassis such that they are not located between the support member channel and the display screen. A support member is moveably coupled to the chassis and operable to move into a stored position in which the support member is positioned in the support member channel. The subset of the plurality of components are positioned to allow the support member to be flush with the second surface when in the stored position without adding to a maximum thickness of the system.

US 2017/0000250 A1 discloses a support for a portable electronic device, the support having a case that is configured to receive and hold the portable electronic device. A strap is coupled to the case and configured for fitting around an appendage of a user and allowing the user to support the case relative to the appendage. A support stand is coupled to the case independently of the strap and includes a portion that is swivelable away from the case and is configured, when swiveled away from the case, for supporting the case on an external surface in an angled arrangement relative to the external surface. Optionally, the base is positioned on a back plane of the case, and a rotational mechanism is coupled between the base and the case such that the case is rotatable relative to the base.

### SUMMARY

The invention is set out in appended claim 1. The dependent claims describe advantageous embodiments.

According to embodiments of the present disclosure, a display device can be installed with stability at an installation angle at which the display device is easy to use regardless of whether the display device is in portrait or landscape orientation.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is an external perspective view of a front side of a display device in landscape orientation, according to a first embodiment of the present disclosure;
FIG. 2 is an external perspective view of a rear side of the display device in landscape orientation, according to the first embodiment of the present disclosure;
FIG. 3A is a rear view of the display device according to the first embodiment of the present disclosure;
FIG. 3B is a side view of the display device according to the first embodiment of the present disclosure;
FIG. 4 is a diagram illustrating opening and closing operations of a stand of the display device according to the first embodiment of the present disclosure;
FIG. 5 is a perspective view of the rear side of the display device installed in portrait orientation according to the first embodiment of the present disclosure;
FIG. 6 is a diagram illustrating design requirements related to landscape-orientation installation of the display device according to the first embodiment of the present disclosure;
FIG. 7 is a diagram illustrating design requirements related to portrait-orientation installation of the display device according to the first embodiment of the present disclosure;
FIG. 8 is another diagram illustrating design requirements related to portrait-orientation installation of the display device according to the first embodiment of the present disclosure;
FIG. 9 is a diagram illustrating an internal structure of the display device according to the first embodiment of the present disclosure;
FIG. 10 is an external perspective view of a rear side of a display device installed in landscape orientation, according to a second embodiment of the present disclosure;
FIG. 11 is an external perspective view of the rear side of the display device installed in portrait orientation, according to the second embodiment of the present disclosure; and
FIG. 12 is a diagram illustrating design requirements related to installation of the display device according to the second embodiment.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

### First Embodiment

### Structure of Display Device 100

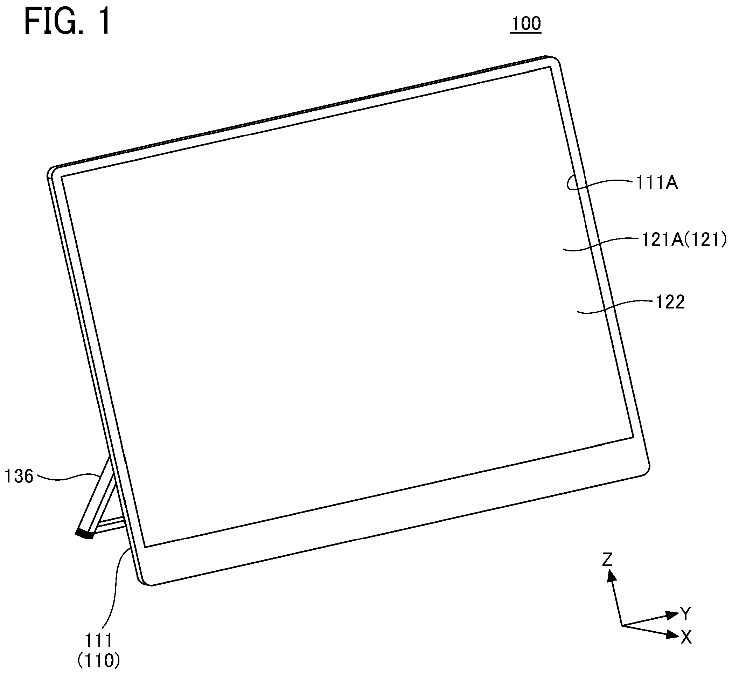

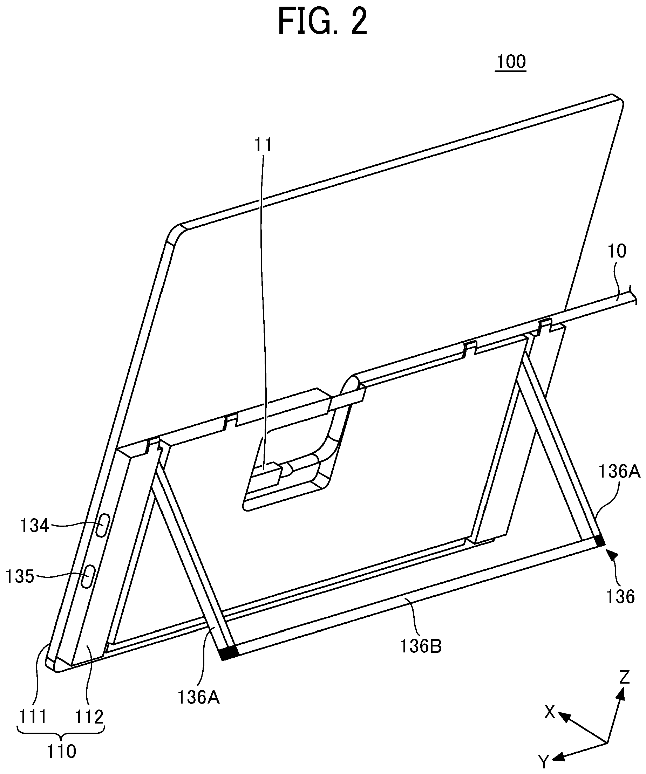

FIG. 1 is an external perspective view of a front side of a display device 100 installed in landscape orientation, according to a first embodiment. FIG. 2 is an external perspective view of a rear side of the display device 100 installed in landscape orientation, according to the first embodiment.

In the following description, the short side direction of a display 121 is referred to as the Z-axis direction (the up-down direction in FIG. 1). The long side direction of the display 121 is referred to as the Y-axis direction (the width direction or lateral direction in FIG. 1). The depth direction of the display 121 is referred to as the X-axis direction (the front-back direction).

In the embodiments of the present disclosure, it is assumed that the direction (Y-axis positive direction) to the left when viewed from the rear side (X-axis negative side) of the display is referred to as the left direction, and the direction (Y-axis negative direction) to the right when viewed from the rear side (X-axis negative side) of the display is referred to as the right direction unless otherwise specified.

In the display device 100 illustrated in FIGS. 1 and 2, a screen 121A of the display 121 is disposed on the front side (face on the X-axis positive side). The display device 100 is connected to an external device (e.g., a laptop personal computer (PC), a smartphone, or an electric power source such as an alternating current (AC) adapter) via a cable 10 and can display various images (moving images or still images) transmitted from the external device via the cable 10 on the screen 121A of the display 121. In other words, the display device 100 is a relatively thin display device having a built-in battery and portable. The display device 100 can be carried together with the external device and connected to the external device at the time of use. In other words, the display device 100 can be used as an extended display of an external device.

As illustrated in FIGS. 1 and 2, the display device 100 includes a housing 110 that defines the outer shape of the display device 100. The housing 110 is made of resin and has a hollow structure. The housing 110 includes a thin portion 111 and a thick portion 112.

The thin portion 111 is a plate-shaped portion on the front side (Z-axis positive side) of the housing 110. The thin portion 111 has a rectangular shape in plan view from the front side (in the X-axis positive direction) or the rear side (in the X-axis negative direction). The thin portion 111 is relatively thin in the depth direction (X-axis direction). The display 121 is attached to the thin portion 111. The screen 121A of the display 121 is exposed from a rectangular opening 111A formed in a front face (face on the X-axis positive side) of the thin portion 111. The display 121 is, for example, an organic electro-luminescence (EL) display or a liquid crystal display.

In the thin portion 111, a touch sensor 122 is overlaid on the screen 121A of the display 121. The touch sensor 122 receives various input operations, for example, a selection operation and an input by handwriting or hand-drafting. As the touch sensor 122, for example, a capacitive touch panel can be used.

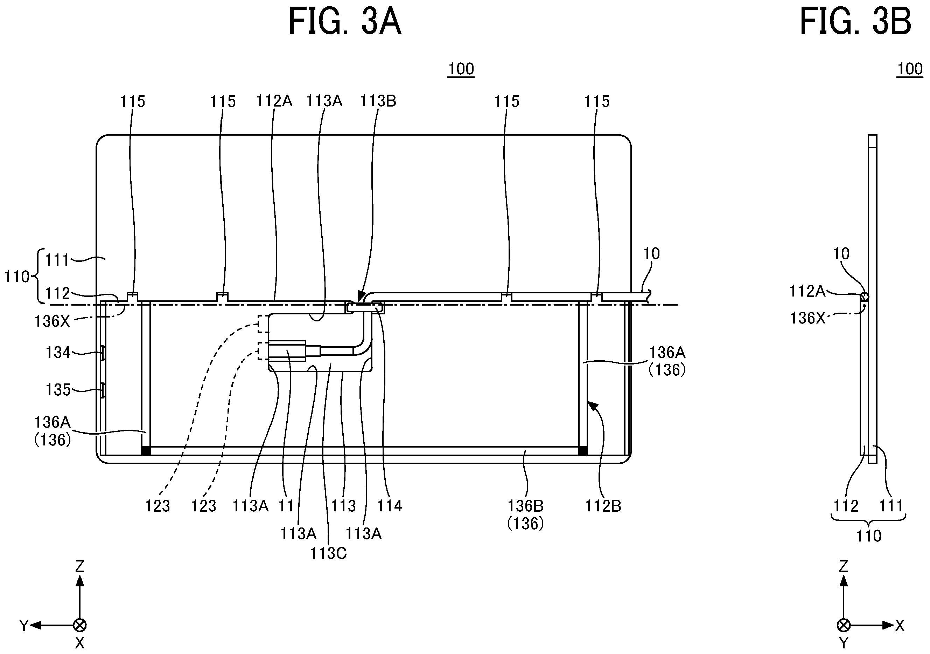

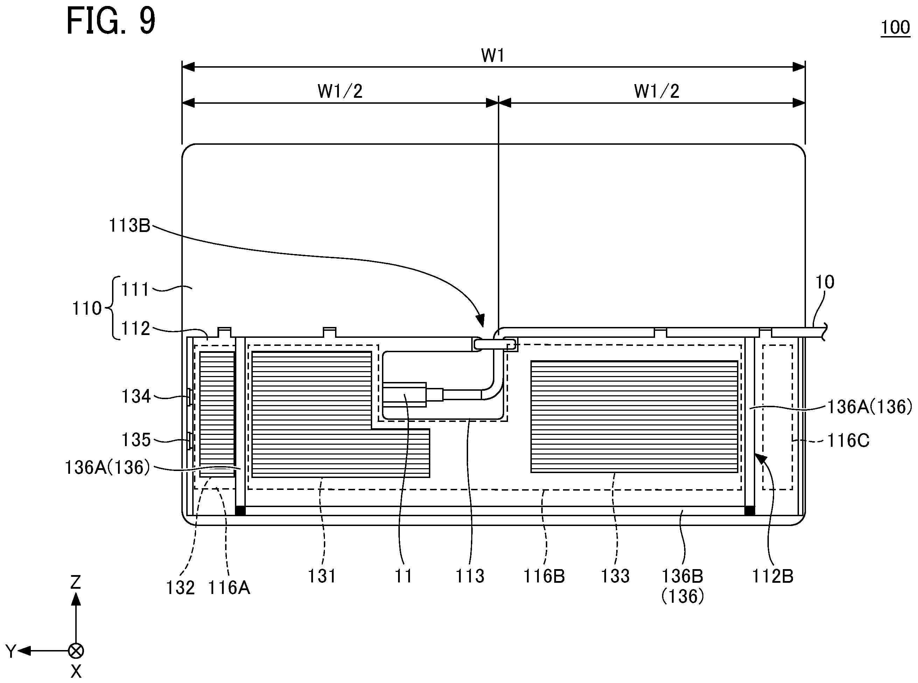

The thick portion 112 is a plate-shaped portion on the rear side (X-axis negative side) of the housing 110. The thick portion 112 protrudes backward from a lower portion of a rear face of the thin portion 111. The thick portion 112 is relatively thick in the depth direction (X-axis direction). The thick portion 112 has a rectangular shape in plan view from the rear side (in the X-axis negative direction). The thick portion 112 has a short-side length and a long-side length such that the thick portion 112 does not protrude from the thin portion 111 in plan view from the rear side (in the X-axis negative direction). As illustrated in FIG. 9, the thick portion 112 contains a main control board 131, an operation board 132, and a battery 133. As illustrated in FIGS. 3A and 3B, interface portions 123 to each of which a connector 11 of the cable 10 is connected are provided on a rear face of the thick portion 112. Further, a stand 136 is provided on the rear face of the thick portion 112.

### Structure of Rear Face of Display Device 100

FIGS. 3A and 3B are a rear view and a side view, respectively, of the display device 100 according to the first embodiment.

As illustrated in FIG. 3A, a recess 113 is formed in the rear face of the thick portion 112 of the housing 110. The recess 113 is recessed to the front side (in the X-axis positive direction) and has a certain depth.

In the present embodiment described with reference to FIG. 3A, the recess 113 has a rectangular shape in plan view from the rear side, but the shape of the recess 113 is not limited thereto. The recess 113 has a plurality of walls 113A extending in the thickness direction of the thick portion 112 and a bottom 113C parallel to a direction intersecting the walls 113A.

As illustrated in FIG. 3A, the interface portions 123 are exposed in the recess 113 of the thick portion 112. In the present embodiment described with reference to FIG. 3A, the interface portions 123 are exposed in the recess 113 from the wall 113A on the Y-axis positive side of the recess 113 of the thick portion 112.

Accordingly, in the display device 100 according to the first embodiment illustrated in FIG. 3A, the connector 11 at one end of the cable 10 can be disposed in the recess 113 and connected to the interface portion 123.

In other words, in the display device 100 according to the first embodiment, the connector 11 of the cable 10 can be connected to the interface portion 123 without protruding from the side face of the housing 110.

As a result, the display device 100 and an external device can be disposed next to each other.

Further, since the display device 100 according to the first embodiment can prevent application of a sudden load to the connector 11 of the cable 10, the risk of damaging the interface portion 123 can be reduced.

The cable 10 may be, for example, a universal serial bus (USB) cable or a HIGH-DEFINITION MULTIMEDIA INTERFACE (HDMI) cable. The interface portion 123 has a shape that fits the connector 11 of the cable 10.

The depth of the recess 113 (depth in the X-axis direction) is larger than the thickness of the connector 11 and the outer diameter of the cable 10. Accordingly, in the display device 100 according to the first embodiment, as illustrated in FIG. 3B, the cable 10 (including the connector 11) in the recess 113 can be connected to the interface portion 123 without protruding from the rear face of the thick portion 112 (to the X-axis negative side).

As a result, the display device 100 according to the first embodiment can prevent application of a sudden load to the connector 11 of the cable 10 from the rear side of the thick portion 112.

As illustrated in FIG. 3A, the thick portion 112 includes an outlet 113B through which the cable 10 can be drawn out from the recess 113 above the thick portion 112 (to Z-axis positive side). To be specific, the outlet 113B has a groove shape extending upward (in the Z-axis positive direction) from an upper right corner (Z-axis positive side and Y-axis negative side) of the recess 113 and continuous with a space above the thick portion 112. In other words, the outlet 113B is open in an upper end face 112A of the thick portion 112. The depth of the outlet 113B (in the X-axis direction) is the same as the depth of the recess 113 (in the X-axis direction).

As a result, in the display device 100 according to the first embodiment, the cable 10 can be drawn out, from the recess 113, above the thick portion 112 without protruding from the rear face of the thick portion 112 (to the X-axis negative side).

Further, as illustrated in FIG. 3A, the thick portion 112 includes a holder 114 to hold the cable 10 to the outlet 113B. To be specific, the holder 114 is positioned astride the outlet 113B in the lateral direction (Y-axis direction), and both lateral end portions (in the Y-axis direction) of the holder 114 can be fit to the thick portion 112.

At least one of the lateral end portions of the holder 114 is attachable to and detachable from a fitting hole in the thick portion 112. Accordingly, in the display device 100, when at least one of the lateral end portions of the holder 114 is pulled out from the fitting hole in the thick portion 112, the outlet 113B is opened and the cable 10 can be wired in the outlet 113B. Similarly, in the display device 100, when at least one of the lateral end portions of the holder 114 is fitted into the fitting hole in the thick portion 112, the outlet 113B is closed and the cable 10 can be retained in the outlet 113B.

As a result, in the display device 100 according to the first embodiment, the cable 10 can be retained at the outlet 113B by the holder 114 not to fall off from the outlet 113B. Further, according to the display device 100 of the first embodiment, even when a load (such as being pulled) is applied to the cable 10, the holder 114 can receive the load. As a result, a risk of damaging the interface portion 123 can be reduced.

As illustrated in FIGS. 3A and 3B, the thick portion 112 has the upper end face 112A that guides a cable path along which the cable 10 drawn out from the outlet 113B is laid. The upper end face 112A serves as a contour along which the cable is laid.

As a result, in the display device 100 according to the first embodiment, the cable 10 drawn out from the outlet 113B can be easily laid along the predetermined cable path.

As illustrated in FIGS. 3A and 3B, the thick portion 112 includes clamps 115 to hold the cable 10 laid along the cable path guided by the upper end face 112A of the thick portion 112.

As a result, the display device 100 according to the first embodiment can hold the cable 10 drawn out from the outlet 113B on the predetermined cable path.

In the present embodiment described with reference to FIG. 3A, the thick portion 112 includes two clamps 115 for each of the cable path of the cable 10 on the right side (Y-axis negative side) of the outlet 113B and the cable path of the cable 10 on the left side (Y-axis positive side) of the outlet 113B.

As a result, in the display device 100 according to the first embodiment, the cable 10 can be held on the cable path by the two clamps 115 in either a case where the cable 10 is drawn out to the left (in the Y-axis positive direction) from the outlet 113B or a case where the cable 10 is drawn out to the right (in the Y-axis negative direction) from the outlet 113B.

In the present embodiment described with reference to FIG. 3A, on the rear face of the thick portion 112, the interface portion 123 is disposed closer to the left end (the Y-axis positive side) than a center in the lateral direction (Y-axis direction), while the outlet 113B is disposed in a central area in the lateral direction (Y-axis direction).

Accordingly, in the display device 100 according to the first embodiment, the cable 10 connected to the interface portion 123 can be easily bent and drawn out from the outlet 113B above the thick portion 112 in the Z-axis positive direction. In other words, the cable 10 connected to the interface portion 123 can be easily bent and drawn out from the center area in the lateral direction (Y-axis direction) above the thick portion 112 in the Z-axis positive direction.

Further, in the display device 100 according to the first embodiment, the cable 10 can be drawn out from the outlet 113B to either the left (in the Y-axis positive direction) or the right (in the Y-axis negative direction).

As described above, in the display device 100 according to the first embodiment, the outlet 113B is disposed in the central area in the lateral direction (Y-axis direction). As a result, the length of a portion of the cable 10 guided along the upper end face 112A of the thick portion 112 can be equal between the case where the cable 10 is drawn out to the left (in the Y-axis positive direction) from the outlet 113B and the case where the cable 10 is drawn out to the right (in the Y-axis negative direction) from the outlet 113B. In other words, the length of the portion of the cable 10 drawn out from the housing 110 to the outside can be equal. As a result, in the display device 100 according to the first embodiment, the required length of the cable 10 can be constant regardless of whether an external device to be connected to the display device 100 is arranged on the left or the right of the display device 100.

In the present embodiment described with reference to FIG. 3A, the two interface portions 123 are arranged in the up-down direction (Z-axis direction) on the wall 113A on the Y-axis positive side of the recess 113 of the thick portion 112. Accordingly, in the display device 100 according to the first embodiment, two cables 10 can be connected in the recess 113 so that two external devices are connected to the display device 100 via the two cables 10. In the present embodiment described with reference to FIG. 3A, the outlet 113B has a lateral width larger than twice the outside diameter of the cable 10 such that the two cables 10 can be drawn out side by side.

Further, as illustrated in FIG. 3A, a switch 134 and a switch 135 are provided on the left face (Y-axis positive side) of the thick portion 112. The switch 134 and the switch 135 are, for example, a power button, a selection button, a confirmation button, and a return button.

As illustrated in FIG. 3A, the display device 100 according to the first embodiment further includes a stand 136 that can be stored in the thick portion 112. As illustrated in FIG. 3A, the stand 136 is rotatable about a rotation axis 136X positioned at an upper end of the stand 136.

The stand 136 has a rectangular frame shape. To be more specific, the stand 136 includes a pair of short frame portions 136A (right and left frame portions in the Y-axis direction) and a long frame portion 136B that connects lower ends of the short frame portions 136A. The stand 136 has a rectangular frame shape (so-called U-shape) in which an upper side (between upper ends of the short frame portions 136A) is open.

In the thick portion 112, a storage groove 112B having the same shape as the stand 136 is formed.

As a result, the display device 100 according to the first embodiment can store the stand 136 in the storage groove 112B such that the stand 136 does not protrude from the rear face of the thick portion 112.

### Installation of Display Device 100

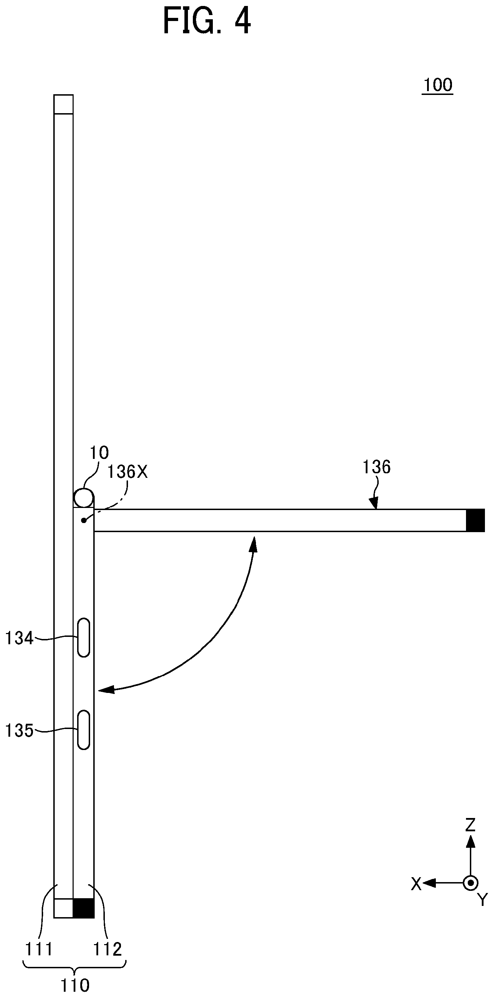

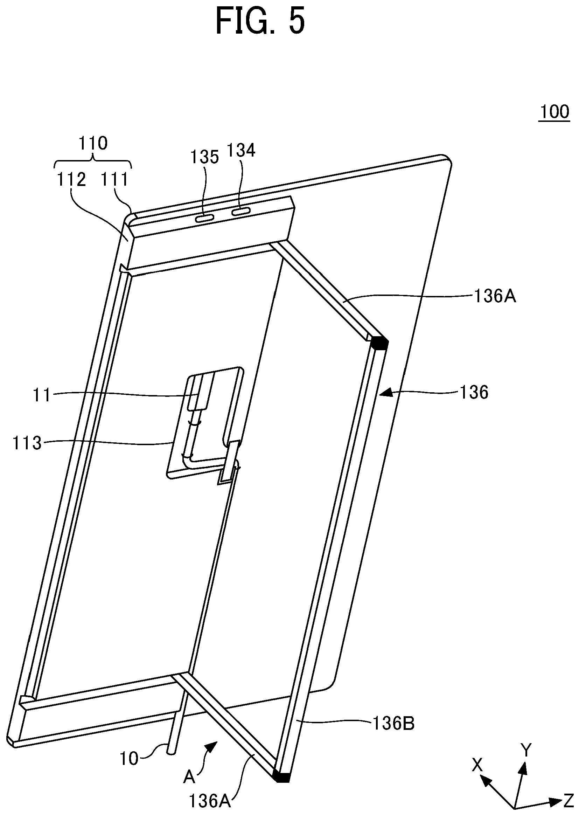

FIG. 4 is a diagram illustrating opening and closing operations of the stand 136 of the display device 100 according to the first embodiment. FIG. 5 is a perspective view of the rear side of the display device 100 installed in portrait orientation according to the first embodiment.

As illustrated in FIG. 4, the stand 136 can rotate about the rotation axis 136X at the upper end of the stand 136, to open and close. The stand 136 can be opened and closed at a desired opening angle. FIG. 4 illustrates the stand 136 opened at an opening angle of 90°, for example.

The opening angle of the stand 136 may be any angle greater than 90°, and the maximum opening angle is 180° in this embodiment.

When the stand 136 is closed such that the opening angle is 0°, the stand 136 can be stored in the storage groove 112B in the thick portion 112

Further, the display device 100 according to the first embodiment can be installed in portrait orientation and landscape orientation with respect to the installation surface, and the stand 136 can support the display device 100 in both portrait-orientation installation and landscape orientation installation.

For example, as illustrated in FIGS. 1 and 2, in the display device 100 according to the first embodiment, the housing 110 in landscape orientation (with the long side of the housing 110 faced down in the direction of gravity) can stand on the installation surface when the stand 136 is rotated from the stored position to the opened position. In the display device 100 according to the first embodiment, the opening angle of the stand 136 is adjustable so as to adjust the inclination of the housing 110 relative to the installation surface.

In particular, in the display device 100 according to the first embodiment, the opening angle of the stand 136 is adjustable in a stepless manner. Since the inclination of the housing 110 relative to the installation surface is adjustable in a stepless manner, degree of freedom in the installation of the display device 100 in landscape orientation increases.

The display device 100 according to the first embodiment further includes a known load applying device that applies a constant load to the opening and closing operations. In the display device 100 according to the first embodiment, while the opening angle of the stand 136 is manually adjustable in a stepless manner, applying the constant load can reduce the risk that the stand 136 supporting the display device 100 is unintentionally opened or closed (in other words, the installation angle of the display device 100 is unintentionally changed).

Alternatively, as illustrated in FIG. 5, in the display device 100 according to the first embodiment, the housing 110 in the portrait orientation (with the short side of the housing 110 faced down in the direction of gravity) can stand on the installation surface when the stand 136 is rotated from the stored position to the opened position.

In this case, in the display device 100 according to the first embodiment, by positioning the stand 136 to have the opening angle of 90°, the housing 110 can be stably supported by the stand 136 at the center in the short side direction of the housing 110.

The display device 100 according to the first embodiment may detect the orientation of the housing 110 by a sensor and automatically rotate the orientation of the screen displayed on the display 121 in accordance with the orientation of the housing 110. Alternatively, the display device 100 according to the first embodiment may rotate the screen displayed on the display 121 in accordance with the orientation of the screen set by a user.

Further, as illustrated in FIG. 3, the rotation axis 136X of the stand 136 is positioned below the upper end face 112A of the thick portion 112. Accordingly, in the display device 100 according to the first embodiment, the opening and closing operations of the stand 136 do not interfere with the cable 10 laid along the upper end face 112A of the thick portion 112.

In the display device 100 according to the first embodiment, the connector 11 of the cable 10 can be connected to the interface portion 123 in the recess 113 on the rear face of the thick portion 112. Further, the connector 11 and a part of the cable 10 can be housed in the recess 113.

Accordingly, in the display device 100 according to the first embodiment, when the display device 100 is viewed from the front side, the connector 11 does not protrude from the housing 110 in both of the landscape orientation installation and the portrait-orientation installation. In other words, the connector 11 can be hidden from the user in both of the landscape orientation installation and the portrait-orientation installation.

Further, when the display device 100 according to the first embodiment is installed in landscape orientation as illustrated in FIG. 2, the cable 10 can be drawn out through the outlet 113B (see FIG. 3A) from the thick portion 112 (to the Z-axis positive side) and laid along the upper end face 112A of the thick portion 112.

Alternatively, when the display device 100 according to the first embodiment is installed in portrait orientation as illustrated in FIG. 5, the cable 10 can be drawn out through the outlet 113B (see FIG. 3A) from the thick portion 112 (to the Z-axis positive side) and hung along the upper end face 112A of the thick portion 112. Further, the cable 10 can be laid so as to pass through a triangular clearance A (see FIG. 5) between the short frame portion 136A of the stand 136 and the installation surface.

As described above, in the display device 100 according to the first embodiment, the cable 10 can be laid along the exterior of the display device 100 in both of landscape-orientation installation and portrait-orientation installation. Thus, the routing of the cable 10 can be easy.

In the display device 100 according to the first embodiment, the stand 136 has a rectangular frame shape surrounding the recess 113. With this structure, the stand 136 does not hinder the work of connecting the connector 11 to the interface portion 123 in the recess 113, thus facilitating the work of connecting and laying the cable 10 by the user.

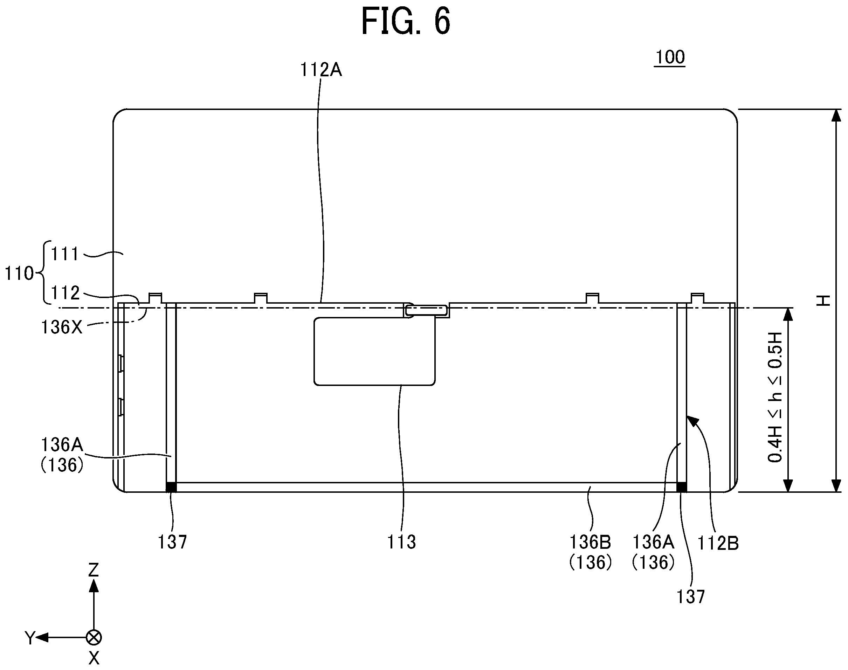

In the display device 100 according to the first embodiment, the stand 136 includes elastic members 137 (see FIG. 6) at a lower left corner and a lower right corner (at the ends in the Y-axis direction on the Z-axis negative side) serving as contact portions with the installation surface. As the elastic members 137, for example, rubber or silicon is used. The elastic members 137 can increase the gripping force of the stand 136 relative to the installation surface in both landscape-orientation installation and portrait-orientation installation, thus increasing the stability of the installed display device 100 according to the first embodiment.

The stand 136 may be provided with the elastic members 137 by any method. For example, the stand 136 may be covered with the elastic members 137. Alternatively, the elastic members 137 may be fixed to the stand 136 or fitted into notches of the stand 136. The elastic member 137 may have any shape such as a tubular shape, a block shape (for example, a cube shape or a ball shape), or a plate shape.

Design Requirements related to Landscape-Orientation Installation of Display Device 100

FIG. 6 is a diagram illustrating design requirements related to the landscape-orientation installation of the display device 100 according to the first embodiment.

As illustrated in FIG. 6, in the display device 100 according to the first embodiment, the stand 136 has the rotation axis 136X at the center in the short-side direction (Z-axis direction) of the housing 110.

With this structure, the display device 100 according to the first embodiment has an increased stability when installed in landscape-orientation as illustrated in FIGS. 1 and 2.

Further, according to the first embodiment, also when the display device 100 is installed in portrait-orientation as illustrated in FIG. 5, the stand 136 is positioned at the center in the short side direction of the housing 110. Thus, the stand 136 can support the housing 110 in a well-balanced manner.

Referring to FIG. 6, in the display device 100 according to the first embodiment, a width h of the stand 136 in the short-side direction (Z-axis direction) is 0.5 times as long as a width H of the housing 110 in the short-side direction (Z-axis direction).

This structure is advantageous in that the long frame portion 136B of the stand 136 can be positioned on the installation surface at a position as far away as possible from the housing 110 to the rear side (in the X-axis negative direction) on the installation surface. Thus, the stability in landscape-orientation installation as illustrated in FIGS. 1 and 2 increases.

However, for example, interference with other components may make it difficult to set the width h of the stand 136 in the short-side direction (Z-axis direction) to 0.5 times the width H of the housing 110 in the short-side direction (Z-axis direction). In such a case, when the width h of the stand 136 in the short-side direction (Z-axis direction) is at least 0.4 times the width H of the housing 110 in the short-side direction (Z-axis direction), the stability in landscape-orientation installation can be sufficient.

According to the invention the width h of the stand 136 in the short-side direction (Z-axis direction) is in a range of from 0.4 times to 0.5 times the width H of the housing 110 in the short-side direction (Z-axis direction).

Design Requirements Related to Portrait-Orientation Installation of Display Device 100

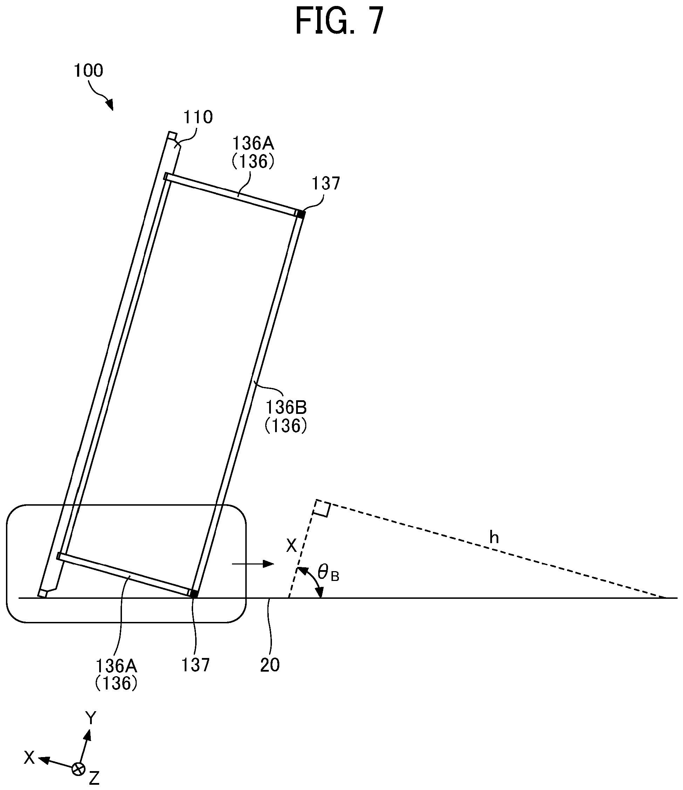

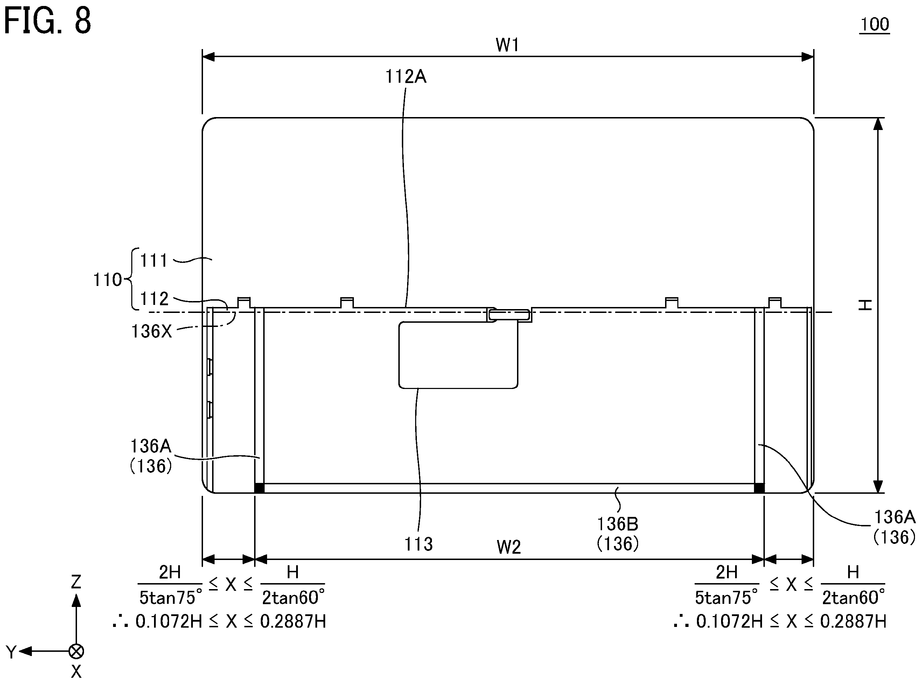

FIG. 7 and FIG. 8 are diagrams illustrating design requirements related to the portrait-orientation installation of the display device 100 according to the first embodiment.

As illustrated in FIG. 8, a width W2 of the stand 136 in the long-side direction thereof (i.e., lateral direction in FIG. 8) is narrower than a width W1 of the housing 110 in the long-side direction thereof. As a result, as illustrated in FIG. 8, in the display device 100 according to the first embodiment, the end of the housing 110 is at a distance X outward from the end of the stand 136 at each lateral end in FIG. 8.

Generally, an installation angle of a display of, for example, a laptop PC relative to the installation surface is preferably in a range of 60° to 75°.

In a case that the display device 100 according to the first embodiment is installed in portrait orientation as illustrated in FIG. 7, Formulas 1 and 2 below are satisfied when θ_{B} represents the installation angle relative to an installation surface 20, X represents the distance from the end of the housing 110 to the end of the stand 136 in the long-side direction of the housing 110 (Y-axis direction), and h represents the width of the stand 136 in the short-side direction. These dimensions are schematically indicated by broken lines in an enlarged manner in a right part of FIG. 7. $tan {θ}_{B} = \frac{h}{X}$ Formula 1 $X = \frac{h}{tan {θ}_{B}}$ Formula 2

The width h in the short-side direction of the stand 136 is expressed by Formula 3 below. $\frac{2}{5} H ≦ h ≦ \frac{1}{2} H$ Formula 3

Accordingly, in the portrait-orientation installation of the display device 100 according to the first embodiment, the installation angle θ_{B} relative to the installation surface 20 can be in the range of 60° to 75°, as illustrated in FIG. 8, when the distance X from the end of the housing 110 to the end of the stand 136 in the long-side direction (Y-axis direction) of the housing 110 satisfies Formula 4 below. $\frac{2 H}{5 tan 75 °} ≦ X ≦ \frac{H}{2 tan 60 °}$ Formula 4

According to the invention the distance X from the end of the housing 110 to the end of the stand 136 in the long-side direction (Y-axis direction) of the housing 110 is in a range of from 0.1072 times to 0.2887 times the width H of the housing 110 in the short-side direction (Z-axis direction).

With this structure, the installation angle of the display device 100 relative to the installation surface 20 can be within the range of 60° to 75° at which the user can easily use the display device 100 in both the landscape-orientation installation and the portrait-orientation installation.

As a result, the installation stability and usability of the display device 100 increase. Further, according to the display device 100 of the first embodiment, incorporating the stand 136 in the housing 110 obviates the need for carrying a stand separate from the housing 110, and the portability of the display device 100 increases.

### Internal Structure of Display Device 100

FIG. 9 is a diagram illustrating an internal structure of the display device 100 according to the first embodiment.

As illustrated in FIG. 9, the display device 100 according to the first embodiment includes the outlet 113B in the center area in the lateral direction (Y-axis direction). As a result, the length of the portion of the cable 10 guided along the upper end face 112A of the thick portion 112 can be the half the width W1 of the housing 110 in the long-side direction (W1/2) in both the case where the cable 10 is drawn out to the left (in the Y-axis positive direction) from the outlet 113B and the case where the cable 10 is drawn out to the right (Y-axis negative direction) from the outlet 113B.

Further, as illustrated in FIG. 9, the display device 100 according to the first embodiment includes the main control board 131, the operation board 132, and the battery 133 inside the thick portion 112.

The main control board 131 is connected to the interface portions 123, and various electronic components are mounted on the main control board 131 to construct a control circuit that controls the entire operation of the display device 100.

The operation board 132 is connected to the switch 134 and the switch 135 disposed on the left face (Y-axis positive side) of the thick portion 112, and various electronic components are mounted on the operation board 132 to construct a control circuit that controls the operations of the switch 134 and the switch 135.

The battery 133 stores electric power to drive the display device 100. Various rechargeable secondary batteries (for example, a lithium-ion battery and a lithium polymer battery) are usable as the battery 133. The display device 100 can be supplied with power from an external device via the cable 10 and the interface portion 123 to charge the battery 133.

As illustrated in FIG. 9, in the display device 100 according to the first embodiment, the stand 136 and the storage groove 112B of the thick portion 112 form three internal regions 116A, 116B, and 116C separated from each other inside the thick portion 112.

The internal region 116A is on the left (Y-axis positive side) of the stand 136. Since the operation board 132 is disposed in the internal region 116A, the internal region 116A is effectively used.

The internal region 116B is positioned between the left and right short frame portions 136A of the stand 136. Since the main control board 131 and the battery 133 are disposed in the internal region 116B with the recess 113 interposed therebetween, the internal region 116B is effectively used.

The internal region 116C is on the right (Y-axis negative side) of the stand 136. Although no component is disposed in the internal region 116C in FIG. 9, the internal region 116C may be effectively used for accommodating some component.

### Second Embodiment

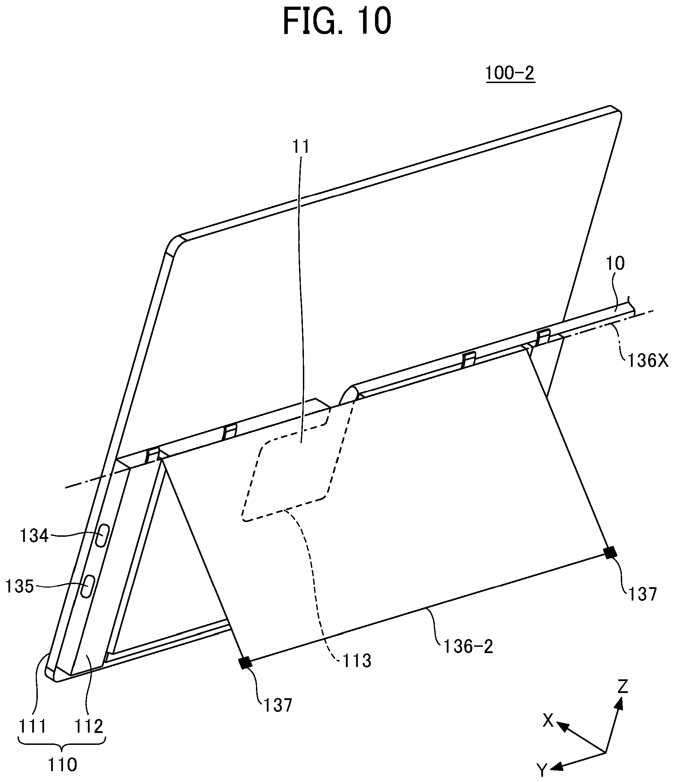

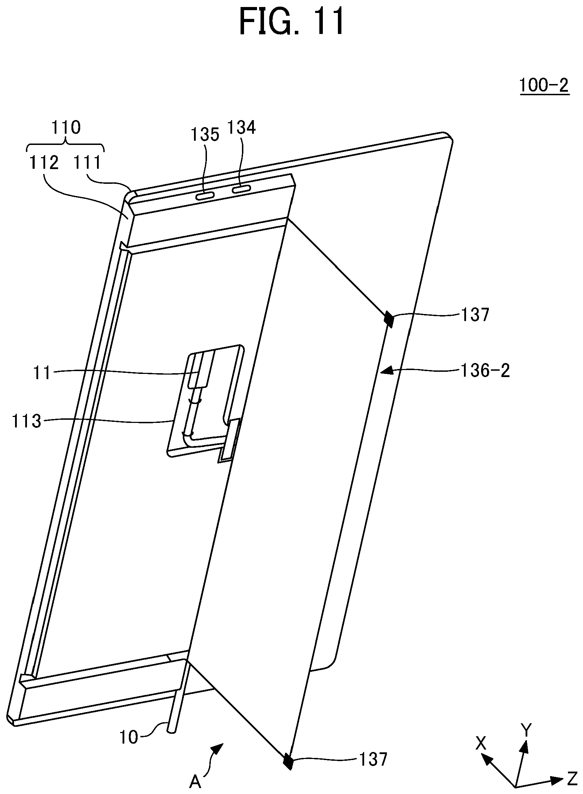

FIG. 10 is an external perspective view of a rear side of a display device 100-2 installed in landscape orientation, according to a second embodiment. FIG. 11 is an external perspective view of the rear side of the display device 100-2 installed in portrait orientation, according to the second embodiment.

The display device 100-2 according to the second embodiment is different from the display device 100 according to the first embodiment in that a stand 136-2 is provided instead of the stand 136.

The stand 136-2 is a so-called kick stand and shaped like a flat plate that is rectangular in plan view, differently from the stand 136.

However, the size of the outer shape of the stand 136-2 can be similar to that of the stand 136 according to the first embodiment. Similar to the stand 136, the stand 136-2 is rotatable about the rotation axis 136X positioned at an upper end of the stand 136-2.

As a result, the stand 136-2 can support the display device 100 in both the landscape-orientation installation and the portrait-orientation installation of the display device 100, similar to the stand 136.

Further, since the stand 136-2 is shaped like a flat plate, the stand 136-2 overlaps with the rear face of the thick portion 112 when stored, thereby covering and hiding the recess 113. Thus, the stand 136-2 enhances the appearance of the rear face of the thick portion 112.

### Design Requirements Related to Installation of Display Device 100-2

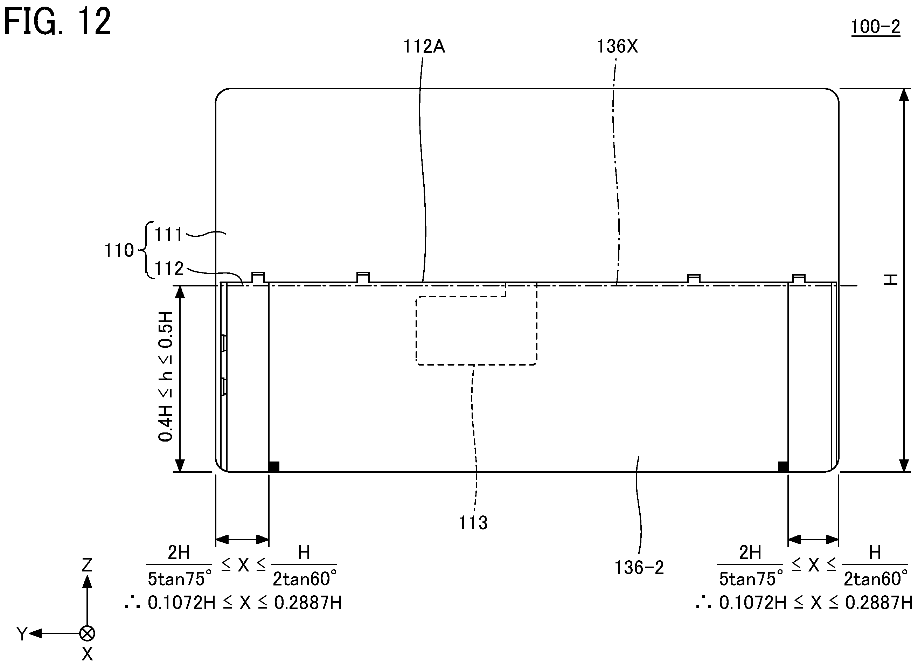

FIG. 12 is a diagram illustrating design requirements related to installation of the display device 100-2 according to the second embodiment.

In the display device 100-2 according to the second embodiment, the design requirements related to landscape-orientation installation and the design requirements related to portrait-orientation installation can be similar to those of the display device 100 according to the first embodiment.

For example, as illustrated in FIG. 12, in the display device 100-2 according to the second embodiment, the stand 136-2 has the rotation axis 136X at the center in the short-side direction (Z-axis direction) of the housing 110.

With this structure, the display device 100-2 according to the second embodiment has an increased stability when installed in landscape orientation as illustrated in FIG. 10.

In the display device 100-2 according to the second embodiment, the width h of the stand 136-2 in the short-side direction (Z-axis direction) is 0.5 times the width H of the housing 110 in the short-side direction (Z-axis direction).

According to the invention the width h of the stand 136-2 in the short-side direction (Z-axis direction) is in the range of from 0.4 times to 0.5 times the width H of the housing 110 in the short-side direction (Z-axis direction).

This structure is advantageous in that a lower long side (contact portion with the installation surface) of the stand 136 (Z-axis negative side in FIG. 12) can be positioned on the installation surface at a position as far away as possible from the housing 110 to the rear side (X-axis negative direction). Thus, the stability in landscape-orientation installation illustrated in FIG. 10 increases.

Further, as illustrated in FIG. 12, in the display device 100-2 according to the second embodiment, the distance X from the end of the housing 110 to the end of the stand 136-2 in the long-side direction (Y-axis direction) of the housing 110 satisfies Formula 4.

According to the invention the distance X from the end of the housing 110 to the end of the stand 136-2 in the long-side direction (Y-axis direction) of the housing 110 is preferably in the range of from 0.1072 times to 0.2887 times the width H of the housing 110 in the short-side direction (Z-axis direction).

With this structure, in the display device 100-2 according to the second embodiment, the installation angle relative to the installation surface 20 can be within the range of 60° to 75° at which the user can easily use the display device 100-2 in both the landscape-orientation installation and the portrait-orientation installation.

As a result, according to the display device 100-2 of the second embodiment, the installation stability and usability increase. Further, according to the display device 100-2 of the second embodiment, since the stand 136-2 is incorporated in the housing 110, it is not necessary to carry a stand separate from the housing 110, and the portability of the display device 100-2 increases.

Further, in the display device 100-2 according to the second embodiment, the stand 136-2 includes the elastic members 137 at the lower left corner and the lower right corner (at the ends in the Y-axis direction on the Z-axis negative side) serving as contact portions with the installation surface. As the elastic members 137, for example, rubber or silicon is used. The elastic member 137 can increase the gripping force of the stand 136-2 relative to the installation surface in both landscape-orientation installation and portrait-orientation installation, thus increasing the stability of the installed display device 100-2 according to the second embodiment.

As described in the embodiments, the aspects of the present disclosure are suitably applicable to a display device including a housing having a thin portion and a thick portion, but the aspects of the present disclosure are also applicable to a display device in which a housing does not have a thin portion and a thick portion (i.e., the housing has a constant thickness).

In addition, for example, as described in the embodiments, the aspects of the present disclosure are suitably applicable to a display device including a housing having a thick portion provided with a recess and interface portions, but the aspects of the present disclosure are also applicable to a display device including a housing having a thick portion not provided with a recess and interface portions.

## Claims

1. A display device (100; 100-2) comprising:
a housing (110) having a rectangular shape in plan view;
a display (121) having a screen surface exposed from a front face of the housing (110); and
a stand (136; 136-2) disposed on a rear face of the housing (110) and pivotable on a rotation axis at a center in a short-side direction of the housing (110), to open and close relative to the housing (110),
wherein the stand (136; 136-2) has a width (W2) in a long-side direction of the housing (110) smaller than a width (W1) of the housing (110) in the long-side direction, the stand (136; 136-2) has a width (h) in the short-side direction in a range of from 0.4 times to 0.5 times of a width (H) of the housing (110) in the short-side direction, and the stand (136; 136-2) is configured to support the display device (100; 100-2) both in landscape-orientation installation relative to an installation surface and in portrait-orientation installation relative to the installation surface,
wherein in the portrait-orientation installation, the stand is in a position in which it forms an opening angle of 90 degrees with respect to the housing (110) about the rotation axis; and
the display device (100; 100-2) further **characterized in that**, in the long-side direction of the housing (110), a distance (X) from an end of the housing (110) to an end of the stand (136; 136-2) is in a range of from 0.1072 times to 0.2887 times of a width (H) of the housing (110) in the short-side direction of the housing (110), wherein the end of the housing (110) is at the distance (X) outward from the end of the stand (136; 136-2) at each lateral end.

2. The display device (100; 100-2) according to claim 1,
wherein the housing (110) includes:
a thin portion (111) provided with the display (121); and
a thick portion (112) disposed on a rear face of the thin portion (111), the thick portion (112) being thicker than the thin portion (111), and
wherein the stand (136; 136-2) is disposed on a rear face of the thick portion (112).

3. The display device (100; 100-2) according to claim 2, further comprising an interface portion (123) connectable to a connector of a cable for connecting the display device (100; 100-2) to an external device external to the display device (100; 100-2),
wherein the thick portion (112) has a recess (113) that accommodates the interface portion (123) therein.

4. The display device (100) according to claim 1,
wherein the stand (136) has a rectangular frame shape and includes a pair of short frame portions (136A) and a long frame portion (136B) coupling the pair of short frame portions (136A).

5. The display device (100-2) according to claim 3,
wherein the stand (136-2) has a plate shape, and the stand (136-2) being closed overlaps with the rear face of the thick portion (112) to cover the recess (113).

6. The display device (100; 100-2) according to claim 1,
wherein the stand (136; 136-2) includes an elastic member (137) in a contact portion with an installation surface.

7. The display device (100-2) according to claim 3,
wherein the recess (113) of the thick portion (112) accommodates the connector of the cable connected to the interface portion (123), and
wherein the recess (113) includes an outlet (113B) to guide the cable from inside the recess (113) such that the cable is laid along a contour of the thick portion (112).

8. The display device (100; 100-2) according to claim 3 or 7,
wherein the stand (136) has a frame shape, and the stand (136) being closed is positioned outside the recess (113) in the thick portion (112) in plan view.

## Patentansprüche

1. Anzeigevorrichtung (100; 100-2), umfassend:
ein Gehäuse (110) mit einer rechteckigen Form in Draufsicht;
eine Anzeige (121) mit einer Anzeigefläche, die von einer Vorderseite des Gehäuses (110) freiliegt; und
einen Ständer (136; 136-2), der an einer Rückseite des Gehäuses (110) angeordnet und um eine Drehachse in einem Zentrum in einer Kurzseitenrichtung des Gehäuses (110) schwenkbar ist, um sich relativ zu dem Gehäuse (110) zu öffnen und zu schließen,
wobei der Ständer (136; 136-2) eine Breite (W2) in einer Langseitenrichtung des Gehäuses (110) aufweist, die kleiner ist als eine Breite (W1) des Gehäuses (110) in der Langseitenrichtung, der Ständer (136; 136-2) eine Breite (h) in der Kurzseitenrichtung in einem Bereich von dem 0,4-Fachen bis zu dem 0,5-Fachen einer Breite (H) des Gehäuses (110) in der Kurzseitenrichtung aufweist, und der Ständer (136; 136-2) dazu eingerichtet ist, die Anzeigevorrichtung (100; 100-2) sowohl in einer Landschaftsausrichtungs-Installation relativ zu einer Aufstellfläche als auch in einer Porträtausrichtungs-Installation relativ zu der Aufstellfläche zu tragen,
wobei sich der Ständer bei der Porträtausrichtungs-Installation in einer Position befindet, in der er bezüglich des Gehäuses (110) um die Drehachse einen Öffnungswinkel von 90 Grad bildet; und
die Anzeigevorrichtung (100; 100-2) ferner **dadurch gekennzeichnet ist, dass** in der Langseitenrichtung des Gehäuses (110) ein Abstand (X) von einem Ende des Gehäuses (110) zu einem Ende des Ständers (136; 136-2) in einem Bereich von dem 0,1072-Fachen bis zu dem 0,2887-Fachen einer Breite (H) des Gehäuses (110) in der Kurzseitenrichtung des Gehäuses (110) liegt, wobei sich das Ende des Gehäuses (110) in dem Abstand (X) nach außen von dem Ende des Ständers (136; 136-2) an jedem seitlichen Ende befindet.

2. Anzeigevorrichtung (100; 100-2) nach Anspruch 1, wobei das Gehäuse (110) umfasst:
einen dünnen Abschnitt (111), der mit der Anzeige (121) versehen ist; und
einen dicken Abschnitt (112), der an einer Rückseite des dünnen Abschnitts (111) angeordnet ist, wobei der dicke Abschnitt (112) dicker als der dünne Abschnitt (111) ist, und
wobei der Ständer (136; 136-2) an einer Rückseite des dicken Abschnitts (112) angeordnet ist.

3. Anzeigevorrichtung (100; 100-2) nach Anspruch 2, ferner umfassend
einen Schnittstellenabschnitt (123), der mit einem Verbinder eines Kabels zum Verbinden der Anzeigevorrichtung (100; 100-2) mit einer externen Vorrichtung außerhalb der Anzeigevorrichtung (100; 100-2) verbindbar ist,
wobei der dicke Abschnitt (112) eine Ausnehmung (113) aufweist, die den Schnittstellenabschnitt (123) darin aufnimmt.

4. Anzeigevorrichtung (100) nach Anspruch 1,
wobei der Ständer (136) eine rechteckige Rahmenform aufweist und ein Paar kurzer Rahmenabschnitte (136A) sowie einen langen Rahmenabschnitt (136B) umfasst, der das Paar kurzer Rahmenabschnitte (136A) miteinander verbindet.

5. Anzeigevorrichtung (100-2) nach Anspruch 3,
wobei der Ständer (136-2) eine Plattenform aufweist, und wobei der geschlossene Ständer (136-2) die Rückseite des dicken Abschnitts (112) überlappt, um die Ausnehmung (113) abzudecken.

6. Anzeigevorrichtung (100; 100-2) nach Anspruch 1,
wobei der Ständer (136; 136-2) ein elastisches Element (137) in einem Kontaktabschnitt mit einer Aufstellfläche umfasst.

7. Anzeigevorrichtung (100-2) nach Anspruch 3,
wobei die Ausnehmung (113) des dicken Abschnitts (112) den mit dem Schnittstellenabschnitt (123) verbundenen Verbinder des Kabels aufnimmt, und
wobei die Ausnehmung (113) einen Auslass (113B) umfasst, um das Kabel aus dem Inneren der Ausnehmung (113) zu führen, so dass das Kabel entlang einer Kontur des dicken Abschnitts (112) verlegt ist.

8. Anzeigevorrichtung (100; 100-2) nach Anspruch 3 oder 7,
wobei der Ständer (136) eine Rahmenform aufweist, und wobei sich der geschlossene Ständer (136) in Draufsicht außerhalb der Ausnehmung (113) im dicken Abschnitt (112) befindet.

## Revendications

1. Dispositif d'affichage (100 ; 100-2), comprenant :
un boîtier (110) ayant une forme rectangulaire en vue en plan ;
un organe d'affichage (121) ayant une surface d'écran exposée depuis une face avant du boîtier (110) ; et
un support (136 ; 136-2) disposé sur une face arrière du boîtier (110) et pivotant sur un axe de rotation à un centre dans une direction de côté court du boîtier (110), pour s'ouvrir et se fermer relativement au boîtier (110),
dans lequel le support (136, 136-2) a une largeur (W2) dans une direction de côté long du boîtier (110) inférieure à une largeur (W1) du boîtier (110) dans la direction de côté long, le support (136 ; 136-2) a une largeur (h) dans la direction de côté court dans une plage de 0,4 fois à 0,5 fois d'une largeur (H) du boîtier (110) dans la direction de côté court, et le support (136 ; 136-2) est configuré pour supporter le dispositif d'affichage (100 ; 100-2) à la fois dans une installation en orientation paysage relativement à une surface d'installation et dans une installation en orientation portrait relativement à la surface d'installation,
dans lequel, dans l'installation en orientation portrait, le support est dans une position dans laquelle il forme un degré d'ouverture de 90 degrés par rapport au boîtier (110) autour de l'axe de rotation ; et
le dispositif d'affichage (100 ; 100-2) est en outre **caractérisé en ce que**, dans la direction de côté long du boîtier (110), une distance (X) depuis une extrémité du boîtier (110) jusqu'à une extrémité du support (136 ; 136-2) est dans une plage de 0,1072 fois à 0,2887 fois d'une largeur (H) du boîtier (110) dans la direction de côté court du boîtier (110), dans lequel l'extrémité du boîtier (110) est à la distance (X), vers l'extérieur, de l'extrémité du support (136, 136-2) à chaque extrémité latérale.

2. Dispositif d'affichage (100 ; 100-2) selon la revendication 1,
dans lequel le boîtier (110) inclut :
une partie mince (111) pourvue de l'organe d'affichage (121 ) ; et
une partie épaisse (112) disposée sur une face arrière de la partie mince (111), la partie épaisse (112) étant plus épaisse que la partie mince (111), et
dans lequel le support (136, 136-2) est disposé sur une face arrière de la partie épaisse (112).

3. Dispositif d'affichage (100 ; 100-2) selon la revendication 2, comprenant en outre une partie d'interface (123) connectable à un connecteur d'un câble pour connecter le dispositif d'affichage (100 ; 100-2) à un dispositif externe, externe au dispositif d'affichage (100 ; 100-2),
dans lequel la partie épaisse (112) a un évidement (113) qui loge la partie d'interface (123) dans celui-ci.

4. Dispositif d'affichage (100) selon la revendication 1,
dans lequel le support (136) a une forme de cadre rectangulaire et inclut une paire de parties de cadre courtes (136A) et une partie de cadre longue (136B) couplant la paire de parties de cadre courtes (136A).

5. Dispositif d'affichage (100-2) selon la revendication 3,
dans lequel le support (136-2) a une forme de plaque, et le support (136-2) fermé chevauche la face arrière de la partie épaisse (112) pour couvrir l'évidement (113).

6. Dispositif d'affichage (100 ; 100-2) selon la revendication 1,
dans lequel le support (136, 136-2) inclut un élément élastique (137) dans une partie de contact avec une surface d'installation.

7. Dispositif d'affichage (100-2) selon la revendication 3,
dans lequel l'évidement (113) de la partie épaisse (112) loge le connecteur du câble connecté à la partie d'interface (123), et
dans lequel l'évidement (113) inclut une sortie (113B) pour guider le câble depuis l'intérieur de l'évidement (113) de manière telle que le câble est posé le long d'un contour de la partie épaisse (112).

8. Dispositif d'affichage (100 ; 100-2) selon la revendication 3 ou 7,
dans lequel le support (136) a une forme de cadre, et le support (136) fermé est positionné à l'extérieur de l'évidement (113) dans la partie épaisse (112) en vue en plan.
